(19)

Europäisches
Patentamt

European
Patent Office

Office européen
des brevets

(11)     **EP 2 409 462 B1**

(12)                    **EUROPEAN PATENT SPECIFICATION**

(45) Date of publication and mention
of the grant of the patent:
**05.06.2013   Bulletin 2013/23**

(51) Int Cl.:
*H04B 7/06* (2006.01)        *H04L 25/03* (2006.01)
*H04L 5/00* (2006.01)

(21) Application number: **10709615.8**

(86) International application number:
**PCT/US2010/026579**

(22) Date of filing: **09.03.2010**

(87) International publication number:
**WO 2010/107609 (23.09.2010 Gazette 2010/38)**

(54) **SPATIAL INFORMATION FEEDBACK IN WIRELESS COMMUNICATION SYSTEMS**

RÄUMLICHE INFORMATIONSRÜCKMELDUNG IN DRAHTLOSEN KOMMUNIKATIONSSYSTEMEN

RÉTROACTION D'INFORMATIONS SPATIALES DANS DES SYSTÈMES DE COMMUNICATIONS
SANS FIL

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **19.03.2009   US 407783**

(43) Date of publication of application:
**25.01.2012   Bulletin 2012/04**

(73) Proprietor: **Motorola Mobility LLC
Libertyville, IL 60048 (US)**

(72) Inventors:
• **SAYANA, Krishna, Kamal
Arlington Heights, IL 60048 (US)**
• **NANGIA, Vijay
Algonquin, IL 60102 (US)**
• **ZHUANG, Xiangyang
Lake Zurich, IL 60047 (US)**

(74) Representative: **Openshaw, Paul Malcolm
Openshaw & Co.
8 Castle Street
Farnham
Surrey GU9 7HR (GB)**

(56) References cited:
**EP-A1- 1 753 152      US-A1- 2010 034 312**

• **Anonymous: "3GPP TS 36.211 V8.6.0: Technical
Specification Group Radio Access Network;
Evolved Universal Terrestrial Radio Access (E-
UTRA); Physical Channels and Modulation
(Release 8)"[Online] 13 March 2009 (2009-03-13),
pages 1-82, XP002616843 3rd Generation
Partnership Project Retrieved from the Internet:
URL:http://www.3gpp.org/ftp/Specs/archive/
36_series/36.211/> [retrieved on 2010-01-14]**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

FIELD OF THE DISCLOSURE

The present disclosure relates generally to wireless communications and more particularly to feeding back spatial covariance information in wireless communication systems.

BACKGROUND

In wireless communication systems, transmission techniques involving multiple antennas are often categorized as open-loop or closed-loop depending on the level or degree of channel response information used by the transmission algorithm. Open-loop techniques do not rely on the information of the spatial channel response between the transmitting device (i.e., transmitter) and the receiving device (i.e., receiver). They typically involve either no feedback or the feedback of some long term statistical information that the transmitting device may use to choose between different open-loop techniques. Open-loop techniques include transmit diversity, delay diversity, and space-time coding techniques such as the Alamouti space-time block code.

Closed-loop transmission techniques utilize knowledge of the channel response to weight the information transmitted from multiple antennas. To enable a closed-loop transmit array to operate adaptively, the array must apply the transmit weights derived from the channel response, its statistics or characteristics, or a combination thereof. There are several methodologies for enabling closed-loop transmission.

Closed loop precoding for single user (SU) schemes is enabled in the current Third Generation Partnership Project Long Term Evolution (3GPP LTE) Release-8 (Rel-8) specification using feedback of an index to a preferred precoding matrix from a set of predetermined precoding matrices (i.e., precoding codebook). Codebook-based feedback is often favored due to its convenience of defining feedback channels for conveying a bit pattern (i.e., corresponding to the precoding matrix index). A receiver determines the best precoding matrix defined in the set and feeds back the corresponding index to the transmitter that then uses the corresponding precoding weights for beamforming. Typically, this "codebook-constrained" beamforming can result in some performance loss compared to optimal beamforming (i.e., without any codebook constraints on the precoding weights).

Using channel knowledge also referred to as channel state information (CSI) or channel impulse response information, for example from downlink/uplink (DL/UL) reciprocity in time divisional duplexing (TDD) systems, is known to provide significant gains. This can be accomplished by channel measurements on uplink sounding and/or transmissions such as reference signals (pilots) and/or data transmission. In frequency division duplexing (FDD) systems, the complete channel state information (CSI) will have to be fed back by some means. If a large number of users are present in a system, it may be difficult to feed back complete CSI for many users due to overhead limitations.

Document "3GPP TS 36.211 V8.6.0: Technical Specification Group Radio Access Network; Evolved Universal Terrestrial Radio Access (E-UTRA); Physical Channels and Modulation (Release 8)", 13 March 2009 (2009-03-13), pages 1-82, discloses (see section 5.3) generating a transmission waveform at a wireless communication unit, the transmission waveform based on a mapping of at least one directly-modulated sequence to a set of radio resource elements and transmitting the transmission waveform from a transceiver of the wireless communication unit.

Document EP 1 753 152 A1 (NTT DOCOMO INC [JP]) 14 February 2007 (2007-02-14) discloses closed loop transmit diversity.

3GPP LTE-Advanced is expected to support advanced multi-input multi-output (MIMO) schemes like multiuser (MU) MIMO and Coordinated Multi-point (CoMP) MIMO transmission. MU MIMO schemes allow transmission to multiple users from the same frequency and time resources. CoMP transmission allows transmission from one or more transmission points to one or more users. These transmission points may or may not be co-located geographically. Furthermore, for effective coordination among transmission points so that mutual interference can be minimized via beamforming, certain information regarding users' channels is necessary at the coordinating transmission points. In addition, users' data can also be required at the coordinating transmission points for certain CoMP schemes known as joint processing transmission schemes. Depending on the level of coordination supported, a transmission point may select from one or more of these schemes based on user feedback. Compared to single point single user schemes, the amount and accuracy of feedback information is critical for the advanced CoMP operations. This is partly owing to the fact that a transmission point requires more channel information to determine best user pairing, transmission point selection, in addition to enabling unconstrained precoding weights that can deliver power more efficiently to the target user while minimizing mutual interference.

The most complete knowledge for optimal beamforming is the perfect downlink CSI on each sub-carrier, which allows theoretically achievable gains. However, feedback channels have limited capacity, so suitably compressed information of the channel is more beneficial for efficient transmission on the feedback channel. Providing compressed channel knowledge allows realization of a significant portion of these theoretical gains. The main design challenges then reside on how to convey spatial channel information efficiently to the transmitter via an optimized and scalable feedback mechanism.

The various aspects, features and advantages of the invention will become more fully apparent to those having ordinary skill in the art upon a careful consideration of the following Detailed Description thereof with the accompanying drawings described below. The drawings may have been simplified for clarity and are not necessarily drawn to scale.

BRIEF DESCRIPTION OF THE DRAWINGS

FIG. 1 is a wireless communication system.

FIG. 2 illustrates a schematic block diagram of a wireless communication unit.

FIG. 3 is a high level flow chart of a process performed by a wireless terminal to generate a transmission waveform based on a spatial channel.

FIG. 4 is a prior art method of conveying a single digital modulation symbol using radio resource elements as defined by PUCCH in 3GPP LTE Release 8.

FIG. 5 is a prior art method of conveying digital modulation symbols using PUCCH as defined by 3GPP LTE Release 8.

FIG. 6 is a prior art method of conveying digital modulation symbols using a set of radio resources as defined by PUSCH in 3GPP LTE Release 8.

FIG. 7 illustrates conveying transmitted coefficients using PUCCH in 3GPP LTE.

FIG. 8 is an embodiment of conveying digital modulation symbols and transmitted coefficients using a set of radio resources in a PUSCH.

FIG. 9 illustrates a method of obtaining transmitted coefficients and other parameters based on a covariance matrix, obtaining directly modulated sequences from transmitted coefficients and digitally modulated sequences from quantized other parameters, obtaining other digitally modulated sequences based on data, and generating a feedback waveform from directly and digitally modulated sequences.

FIG. 10 illustrates a channel interleaver matrix for digital modulation symbols and transmitted coefficients conveyed on a PUSCH.

DETAILED DESCRIPTION

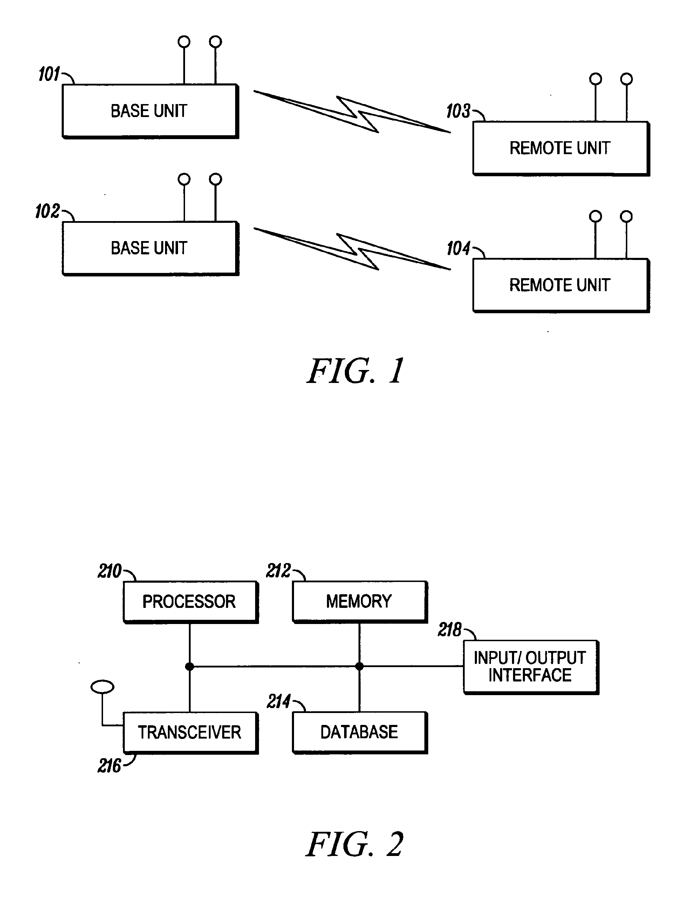

In FIG. 1, a wireless communication system 100 comprises one or more fixed base infrastructure units 101, 102 forming a network distributed over a geographical region for serving remote units in the time and/or frequency domain. A base unit may also be referred to as an access point, access terminal, base, base station, Node-B, eNode-B, Home Node-B, Home eNode-B, relay node, or by other terminology used in the art. The one or more base units each comprise one or more transmitters for downlink transmissions 104, 105 and one or more receivers for receiving uplink transmissions. The base units are generally part of a radio access network that includes one or more controllers communicably coupled to one or more corresponding base units. The access network is generally communicably coupled to one or more core networks, which may be coupled to other networks, like the Internet and public switched telephone networks, among other networks. These and other elements of access and core networks are not illustrated but are well known generally by those having ordinary skill in the art.

In FIG. 1, the one or more base units serve a number of remote units 103,110 within a corresponding serving area, for example, a cell or a cell sector, via a wireless communication link. The remote units may be fixed or mobile. The remote units may also be referred to as subscriber units, mobiles, mobile stations, users, terminals, subscriber stations, user equipment (UE), user terminals, wireless communication devices, or by other terminology used in the art. The remote units also comprise one or more transmitters and one or more receivers. In FIG. 1, the base unit 110 transmits downlink communication signals to serve remote unit 102 in the time and/ or frequency and/or spatial domain. The remote unit 102 communicates with base unit 110 via uplink communication signals. A remote unit 108 communicates with base unit 112. Sometimes the base unit 110 is referred to as a "serving", or connected, or anchor cell for the remote unit 102. The remote units may have half duplex (HD) or full duplex (FD) transceivers. Half-duplex transceivers do not transmit and receive simultaneously whereas full duplex terminals do. The remote units may also communicate with the base unit via a relay node.

In one implementation, the wireless communication system is compliant with the 3GPP Universal Mobile Telecommunications System (UMTS) LTE protocol, also referred to as EUTRA or 3GPP LTE Release 8 (Rel-8) or some later generation thereof, wherein the base unit transmits using an orthogonal frequency division multiplexing (OFDM) modulation scheme on the downlink and the user terminals transmit on the uplink using a single carrier frequency division multiple access (SC-FDMA) scheme. More generally, however, the wireless communication system may implement some other open or proprietary communication protocol, for example, WiMAX, among other protocols. The disclosure is not intended to be limited to the implementation of any particular wireless communication system architecture or protocol. The architecture may also include the use of spreading techniques such as multi-carrier CDMA (MC-CDMA), multi-carrier direct sequence CDMA (MC-DS-CDMA), Orthogonal Frequency and Code Division Multiplexing (OFCDM) with one or two dimensional spreading, or may be based on simpler time and/or frequency division multiplexing/ multiple access techniques, or a combination of these various techniques. In alternate embodiments, communication system may utilize other cellular communication system protocols including, but not limited to, TDMA or direct sequence CDMA (DS-CDMA). The communication system may be a TDD (Time Division Duplex) or FDD (Frequency Division Duplex) system.

In FIG. 2, a wireless communication unit 200 comprises a controller/processor 210 communicably coupled to memory 212, a database 214, a transceiver 216, and an input/output (I/O) device interface 218 connected through a system bus 220. The wireless communication unit 200 may be implemented as a base unit or a remote unit and is compliant with the protocol of the wireless communication system within which it operates, for example, the 3GPP LTE Rel-8 or a later generation protocol discussed above. In FIG. 2, the controller/ processor 210 may be implemented as any programmed processor. However, the functionality described herein may also be implemented on a general-purpose or a special purpose computer, a programmed microprocessor or microcontroller, peripheral integrated circuit elements, an application-specific integrated circuit or other integrated circuits, hardware/electronic logic circuits, such as a discrete element circuit, a programmable logic device, such as a programmable logic array, field programmable gate-array, or the like. In FIG. 2, the memory 212 may include volatile and nonvolatile data storage, including one or more electrical, magnetic or optical memories such as a random access memory (RAM), cache, hard drive, read-only memory (ROM), firmware, or other memory device. The memory may have a cache to speed access to specific data. Data may be stored in the memory or in a separate database. The database interface 214 may be used by the controller/ processor to access the database. The transceiver 216 is capable of communicating with user terminals and base stations pursuant to the wireless communication protocol implemented. In some implementations, e.g., where the wireless unit communication is implemented as a user terminal, the wireless communication unit includes an I/O device interface 218 that connects to one or more input devices that may include a keyboard, mouse, pen-operated touch screen or monitor, voice-recognition device, or any other device that accepts input. The I/O device interface may also connect to one or more output devices, such as a monitor, printer, disk drive, speakers, or any other device provided to output data.

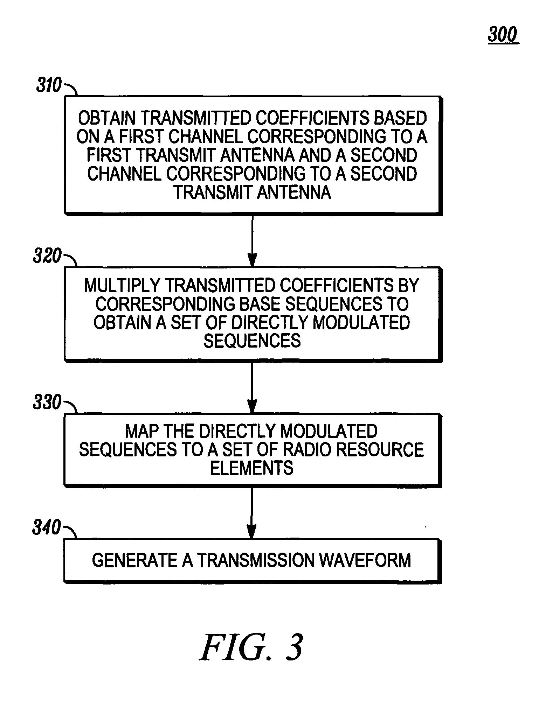

According to one aspect of the disclosure, a process for feedback of spatial correlation information on the uplink is provided herein as illustrated in FIG. 3 at 300. More specifically, at 310, a set of transmitted coefficients are derived based on a first channel corresponding to a first transmit antenna and a second channel corresponding to a second transmit antenna. At 320, these transmitted coefficients are multiplied by a set of base sequences to obtain a set of directly modulated sequences. At 330, the set of directly modulated sequences are mapped to a set of radio resource elements. A transmission waveform is then generated at 340. These acts are described more fully below.

The term "transmitter" is used herein to refer to the source of the transmission intended for a receiver. A transmitter can have multiple co-located antennas (i.e., a transmit antenna array) each of which can emit possibly different waveforms based on the same information source. If multiple transmission points (e.g., base units) participate in the transmission, they are referred to as multiple-point transmissions even though the transmitters can coordinate to transmit the same information source. A base unit may have geographically separated antennas (i.e., distributed antennas from remote radio heads for example), wherein the base unit in this scenario is still referred to as "one transmitter".

Both base unit and remote can be referred to as wireless communication units. In what is typically referred to as the "downlink", base units transmit and remote units receive. In the "uplink", base units receive and remote units transmit. So, both base unit and remote unit can be referred to as a "transmitter" or "receiver" depending on downlink or uplink.

The embodiments in the disclosure described below are from the downlink perspective. However, the disclosure is applicable to the uplink as well.

A spatial covariance matrix (also referred to as a spatial correlation matrix) corresponds to a transmit antenna covariance matrix of the transmit antenna array at the base unit, which captures correlations between transmit antennas in a propagation environment. It can be measured at the receiver based on downlink channel measurements. The downlink channel measurements can be based on reference symbols (RS) provided for the purpose of demodulation, other reference symbols provided specifically for the purpose of measuring this kind of spatial covariance matrix, downlink transmissions or other channel characteristics. For example, a common or cell-specific RS (CRS) or dedicated or user-specific RS (DRS) may correspond to a RS used for demodulation. A channel state information RS (CSI-RS) may correspond to the RS provided for spatial measurements.

Particular to an OFDM system, the spatial covariance matrix can be computed based on the channel matrix (i.e., CSI in the frequency domain) measured on a sub-carrier $k$, which is represented by

$$H_k = \begin{bmatrix} h_{11} & h_{12} & . & h_{1N_t} \\ h_{21} & . & . & . \\ . & . & . & . \\ . & . & . & . \\ h_{Nr1} & . & . & h_{NrN_t} \end{bmatrix} \qquad (1.1)$$

where $h_{ij}$ is the channel from $j$ th transmit antenna to the i th receive antenna. The transmit antenna may correspond to the transmit antenna of a base unit transmitter and the receive antenna may correspond to the receive antenna of the remote unit receiver.

A spatial covariance matrix among a set of transmit antennas is computed as follows:

$$R = \frac{1}{|S|} \sum_{k \in S} H_k^H H_k = \begin{bmatrix} R_{11} & . & . & R_{1,N_t} \\ . & . & . & . \\ . & . & . & . \\ R_{N_t,1} & . & . & R_{N_t,N_t} \end{bmatrix} \qquad (1.2)$$

where $H^H$ denotes the conjugation transpose of a channel matrix H, and S is a set of subcarriers over which the correlation is computed. The set of subcarriers typically corresponds to a sub-band comprising one or more subcarriers (including the special case of a single subcarrier), the system or carrier bandwidth of a single component carrier in the case of spectrum/carrier aggregation etc. In one embodiment, the set of subcarriers in a sub-band are contiguous. A remote unit can accumulate or average (as shown in equation 1.2) the per-subcarrier instantaneous or short-term covariance matrix over multiple subcarriers. A narrow band covariance matrix is accumulated over subcarriers that encompass a small portion of the operational bandwidth (referred to as a sub-band). A sub-band may comprise one or more resource blocks where a resource block comprises a plurality of subcarriers. A wideband or broadband covariance matrix is accumulated over the entire system bandwidth or a large portion of the band. A remote unit can also accumulate an instantaneous covariance matrix over time to obtain a longterm statistical spatial covariance matrix. In another form, a remote unit may compute the above estimate, by including only the rows in the channel matrix corresponding to a subset of the receive antennas on which measurements are available. Also note that a remote unit may obtain the covariance matrix without having to estimate the channel explicitly, for example, by correlating the received pilots sent from each transmit antenna. The computation of spatial covariance matrices is known generally by those having ordinary skill in the art. The present disclosure is not intended to be limited to any particular method or technique of computing a spatial covariance matrix.

The bandwidth or the size in number of subcarriers or resource blocks over which a spatial covariance matrix is computed can be configured by a configuration message transmitted from the base unit to the wireless communication device. In another embodiment, the bandwidth or the size in number of subcarriers or resource blocks is predetermined and a function of a system bandwidth. The set of transmit antennas for which a spatial covariance matrix is computed can belong to one base unit (partial or full set of its antennas) or a plurality of base units at different geographical locations, according to a configuration received by the remote unit. The message could be a system configuration message like a system information block (SIB) or a higher layer configuration message such as a radio resource control (RRC) configuration message. Generally the configuration message may be a broadcast message or a dedicated message. The spatial covariance matrix may correspond to any base unit in a network and may not be necessarily limited to the connected or the anchor base unit/cell. An anchor base unit is typically the base unit that a UE camps on or synchronizes to and monitors for control information. In this case, the UE monitors the control region (e.g., first 'n' symbols of each subframe, wherein a subframe comprises one or more slots with each slot comprising a plurality of symbols) of its anchor base unit and may not monitor the control region of other (non-anchor) base units. Monitoring includes trying to blindly detect control channels called a Physical Downlink Control Channel (PDCCH) in the control region.

Each entry of the spatial covariance matrix corresponds to a correlation between a first transmit antenna $i$ and a second transmit antenna $j$, which is entry $R_{ij}$ in the covariance matrix defined in (1.2) and can be expressed as

$$R_{ij} = \frac{1}{|\mathbf{S}|} \sum_{k \in \mathbf{S}} \left( H_k^i \right)^H H_k^j \qquad (1.3)$$

where $H_k^j$ is the vector channel at subcarrier $k$ observed at all receive antennas from the transmit antenna $j$. Antenna correlation $R_{ij}$ is referred to as autocorrelation if $i=j$ and cross-correlation if $i \neq j$

The base unit can use some information of a spatial covariance matrix for deriving one or more transmission parameters like beamforming/precoding weights, user selection, transmission rank and modulation and coding scheme (MCS) selection. It may also use spatial covariance matrix along with other channel quality information (CQI) to derive these parameters.

At least one transmitted coefficient is based on a first channel corresponding to a first transmit antenna and a second channel corresponding to a second transmit antenna.

In one embodiment of an OFDM system, the channel between a transmit antenna and a receive antenna can be represented in the time domain or in the frequency domain. A channel in the time domain can be represented by size NFFT (size of DFT/FFT in OFDM) vector of complex coefficients, where each entry corresponds to a sample in the time domain. The channel in the frequency domain can be expressed as a similar vector, where each entry is the channel response at each sub-carrier. One can be mapped to another with a DFT/ IDFT. The channel in the frequency domain is used for equalization, but on the other hand the channel in the time domain has fewer significant entries and may be better suited for efficient feedback.

In one implementation, the at least one transmitted coefficient is obtained from the channel state information of at least one of the first or second channels. For example, the at least one transmitted coefficient can correspond to a coefficient of a time-domain channel tap or a coefficient of a channel impulse response in the frequency domain such as at a OFDM subcarrier, or a function of one or more channels such as averaging.

In a preferred embodiment of the above, the at least one transmitted coefficient corresponding to a coefficient of a time domain channel tap, could be the based on a certain number of coefficients of a time domain channel with larger power - in other words, the significant taps in the channel domain, could be used to convey channel information.

The channel coefficients described in the above embodiments [00033]-[00036] can be referred to as either time-domain, or frequency-domain, channel state information, or often just CSI when the context of time or frequency domain is clear.

In another implementation, at least one transmitted coefficient is determined based on at least one spatial covariance matrix formed from the auto-correlation and cross-correlation values. The various embodiments for obtaining such transmitted coefficients will be discussed below.

In one embodiment, the set of transmitted coefficients corresponds to entries of a spatial covariance matrix, i.e., auto-correlation and cross-correlation values among a set of antennas. Since a spatial covariance matrix is Hermitian-symmetric which means that, out of a total of $N_t^2$ entries, there are only $N_t(N_t + 1)/2$ unique entries (i.e., $\{R_{ij}, j \geq i\}$ from the upper-triangular part). These unique entries can represent the entire spatial covariance matrix and they correspond to transmitted coefficients directly.

In particular, unique entries of R (i.e., from the upper triangular part) are extracted as a vector of feedback coefficients and further scaled or normalized using a scaling factor $\kappa$

$$R_v = [R_{11}..R_{1N_t}, R_{22},...R_{2N_t},......R_{N_t N_t}]$$
$$R_{vn} = R_v / \kappa \qquad (1.4)$$

$\kappa$ could be a normalization factor to normalize the entries to an average transmit power constraint so that the mean transmit power is fixed to a constant value. A modified version of this scaling factor can be signaled to allow the base unit to reconstruct the original $R$ matrix. For example, it can be the mean value of diagonal entries of $R$, which corresponds to "pre-processing" receive signal to noise ratio (SNR) averaged over transmit antennas. The "pre-processing" received SNR measured is obtained as

$$SNR_R = \frac{1}{N_t} \sum_{i=1}^{N_t} R_{ii} \qquad\qquad (1.5)$$

In general, a mean of some or more of the entries can be signaled to allow reconstruction of the original matrix. The choice can be made based on the usefulness of such a metric and accuracy of R reconstruction. In the above example, pre-processing SNR could be perceived as a useful feedback quantity by itself.

In another embodiment, the number of coefficients can be further reduced by one, by dividing the covariance matrix by the element located at the first row and first column for example, which is then normalized to one that will not need to be fed back. In another embodiment, the covariance matrix is transformed so that all the diagonal elements are equal which reduces the number of feedback coefficients to $L = N_T(N_T + 1)/2 - (N_T + 1)$. An example of this transformation is shown below

$$\mu = \frac{1}{N_{Tx}} \sum_{i=1}^{N_{Tx}} R_{ii}$$

$$\Phi = diag\left( \sqrt{\frac{\mu}{R_{11}}}, \sqrt{\frac{\mu}{R_{22}}}, \ldots \sqrt{\frac{\mu}{R_{N_{Tx}N_{Tx}}}} \right)$$

$$\tilde{R} = \Phi R \Phi$$

In another embodiment, a set of transmitted coefficients are obtained from a set of feedback coefficients that is derived from at least one spatial covariance matrix. Some methods of deriving feedback coefficients are described below. The choice of different methods to derive feedback coefficients from a spatial covariance matrix may depend on a trade-off among a number of factors such as overhead of feedback, robustness of feedback, and performance impact of feedback.

Typically, the set of feedback coefficients are extracted in a way so that an approximation of the spatial covariance matrix $R$ can be reconstructed reliably. The notion of such reliability depends on the impact of such approximation on the performance of a transmission mode such as transmission to a single user or to multiple users. Some examples of obtaining such feedback coefficients from at least one spatial covariance matrix R are described below.

In one embodiment, a spatial covariance matrix can be approximated by its Eigen decomposition structure where the matrix $R$ can be decomposed as

$$R = VDV^H \qquad\qquad (1.6)$$

where $V = [v_1, v_2, \ldots v_{N_t}]$ are the Eigenvectors corresponding to Eigenvalues $[\lambda_1, \lambda_2, \ldots \lambda_{N_t}] = [D_{11}, D_{22} \ldots D_{N_tN_t}]$. The Eigenvalues may be arranged in decreasing order without loss of generality. The set of feedback coefficient can correspond to entries of at least one Eigenvector, possibly also include at least one associated Eigenvalue. The at least one Eigenvector can represent either the dominant signal space or null space of $R$. The Eigenvalues may be scaled by a scaling factor.

In general, sending less information like some dominant signal and/or null-space Eigenvectors could be sufficient, for example, for cases of simple single or dual stream beamforming, or multiuser schemes. However, the knowledge of the whole covariance matrix is in general preferable, which allows the base unit to determine one or more transmission parameters such as optimally switch between multiuser/single user transmission modes, perform user pairing, determine the rank of each transmission and the corresponding precoding or beamforming vectors. Spatial covariance feedback is preferable since it is useful for all transmission mode assumptions.

In another embodiment, a set of feedback coefficients can also be derived as the inverse of a spatial covariance matrix. Such a case is useful when the information of null-space is more relevant. In the transmission of the original spatial covariance matrix, in general, more transmit power is implicitly allocated to the dominant/desired Eigen space.

By transmitting the inverse of the spatial covariance matrix, the null-space is transmitted with more reliability.

In yet another embodiment, a set of feedback coefficients can be derived from more than one spatial covariance matrix. A general operation can be defined as a function of a spatial covariance matrix of a channel from one or more base units and a spatial covariance matrix corresponding to an interference channel from one or more base units to another matrix can be defined. For example, one such function could be to inv(Ri+a*N)*Rd, where inv(.) is the inverse of a matrix, Ri is an interference matrix defined over a set of interfering cells, and Rd is the spatial covariance matrix corresponding to a cell (serving cell or anchor cell for example), N is a noise and interference variance, 'a' is a regularization factor for the inverse operation. In another example, the coefficients of one or more spatial covariance matrices can be simply combined to derive the set of feedback coefficients. The combination may include accumulation or averaging the one or more spatial covariance matrices. In the embodiments described, the term spatial covariance matrix applies generally to modified matrices determined based on one or more spatial covariance matrices.

In another embodiment, a set of transmitted coefficients are obtained from a transformation of a set of feedback coefficients derived from at least one spatial covariance matrix.

Due to a possible large dynamic range of the feedback coefficients, it is desirable to transform some to improve the cubic metric (CM) of the transmission waveform, where CM is a metric used to capture the peak to average power ratio (PAPR) impact on power back-off.

In one such case, the set of feedback coefficients $X = [x_1, x_2, .... x_L]$ are then transformed to a set of transmitted coefficients $Y = [y_1, y_2, .... y_p]$. The linear transformation maps the set of feedback coefficients (length-L) to a desired number of transmitted coefficients (length-$P$) based on available resources (length-$P$ with $P >= L$ typically). An example of such a linear transformation is the DFT/ IDFT transformation matrix to minimize dynamic range (i.e., power fluctuations) between transmitted coefficients. In the case of $P > L$, the set of feedback coefficients can be repeated, padded with zeros, or even padded with data symbols prior to linear transformation.

In addition, scrambling or element-wise multiplication by a predefined pseudo random sequence or scrambling sequence may be applied to feedback coefficients before linear transformation, to reduce the impact of correlations between feedback coefficients on the dynamic range of the transformed values. The scrambling sequence may be a real or complex scrambling sequence and may be generated from well-know sequences in the art such as Gold sequences, Zadoff-Chu sequences, Generalized Chirp like (GCL) sequences, Frank sequences, PSK sequences, and modifications to such sequences such as truncation or cyclic extension etc. The scrambling sequence may vary or hop between a set of scrambling sequences from one time instant to another time instant such as between SC-FDMA symbols, between slots of a subframe, between subframes, etc. The hopping of the scrambling sequence may be based on a combination of one or more of Physical Cell-ID (PCID), symbol number, slot number, subframe number, system frame number, UE Radio Network Temporary Identifier (RNTI), etc. In another embodiment, the remote unit may determine the scrambling sequence from a finite set of available scrambling sequences that may be beneficial for the remote unit's waveform quality. For example, waveform quality may correspond to peak-to-average power ratio (PAPR) or cubic metric (CM) of the waveform, capability of achieving within a specified lower bound on in-band signal quality, or error vector magnitude (EVM) of the desired transmitted waveform at the required conducted power level, capability of achieving an upper bound of signal power leakage or spectral emissions out of the desired signal bandwidth and into the receive signal band of adjacent or alternate carrier base unit receivers or the signal band of adjacent or alternate carrier remote unit transmitters, minimize the PA power consumption (or peak and/or mean current drain) etc.

The transformation of feedback coefficients can also be dependent on the channel quality. In another embodiment, a linear transformation or source coding of some feedback coefficients may be used to obtain a certain number of transmitted coefficients. The number of transmitted coefficients supported may be derived based on channel quality. Alternatively, it may be implicitly derived based on data modulation and coding (MCS) parameters, depending on feedback requirements on reception quality relative to data as signaled by higher layers. An example of such a transformation is a discrete Fourier transform (DFT) performed on the coefficient set padded with zeros. Such a transformation can achieve non-integer noise gain.

More general transforms may be used considering the structure of the coefficients, and the trade-off on reliability and feedback rate of the transmission, and to reduce cubic metric.

Some examples of the above embodiments are described below. If 10 transmitted coefficients are supported for feedback, the 10 normalized unique entries of a 4x4 covariance matrix can be conveyed as transmitted coefficients. If 20 transmitted coefficients are supported, the 10 normalized unique entries can be repeated to obtain a set of 20 transmitted coefficients. If 15 transmitted coefficients are supported a length 15 DFT is applied to derive 15 transmitted coefficients by zero padding 10 unique entries to 15 before the DFT. Further, if scrambling is supported to reduce cubic metric, a UE may scramble the 10 unique entries by a length 10 truncated or cyclic extended Zadoff-Chu sequence (or other pseudo-random sequence) before the transformations. The UE may choose from a finite set of available Zadoff-chu sequences to optimize (minimize) the cubic metric of transmission.

After obtaining the transmitted coefficients based on at least one correlation between a first and a second antenna, at least one directly-modulated sequence is obtained as a product of at least one transmitted coefficient and a corresponding base sequence. A base sequence can be a DFT base sequence, a Zadoff-Chu sequence, a pseudo-random sequence, a PSK sequence, Generalized Chirp like (GCL) sequences, Frank sequences etc., other sequences known in the art, a linear transformation of these sequences, modifications to such sequences such as truncation or cyclic extension, a cyclic shift version of these sequences, etc. Some examples are described in the embodiments below.

In various embodiments herein, a directly modulated sequence is defined as a sequence formed by multiplying a transmitted coefficient with a base sequence. A transmission coefficient is typically an un-quantized complex or real number which is not derived from a discrete constellation.

On the other hand, a digitally modulated sequence is formed by multiplying a digital modulation symbol with a base sequence, where the digital modulation symbol is one point of a discrete constellation like QPSK, 16QAM or 64QAM. The uplink waveform in 3GPP LTE Rel-8 is generated from digitally modulated sequences as described below.

LTE uplink is based on Single Carrier Frequency Division Multiple Access (SC-FDMA), which supports low PAPR transmission. In OFDMA (as used in the downlink of LTE Release-8), a digital modulation symbol from a discrete constellation like QPSK, 16QAM or 64QAM is mapped directly to a sub-carrier in the frequency domain. In SC-FDMA, a modulation symbol is mapped to a set of consecutive subcarriers in frequency using a corresponding base sequence. Mathematically, this mapping operation corresponds to multiplying the digital modulation symbol by a base sequence to form a digitally modulated sequence. Such a digitally modulated sequence is mapped to the set of consecutive subcarriers. Each such sub-carrier is known in LTE as resource element (RE) and is an example of a radio resource element in [00023]. In an alternate embodiment, the digitally modulated sequence may be mapped to a set of subcarriers or resource elements such that at least two subcarriers/resource elements are non-consecutive. The set of subcarriers may be assigned/allocated by the base unit using control signaling on the PDDCH.

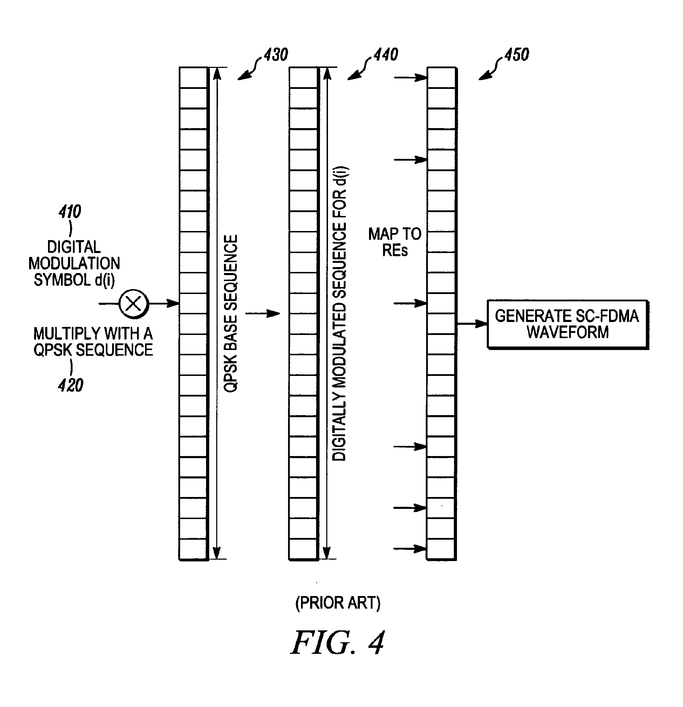

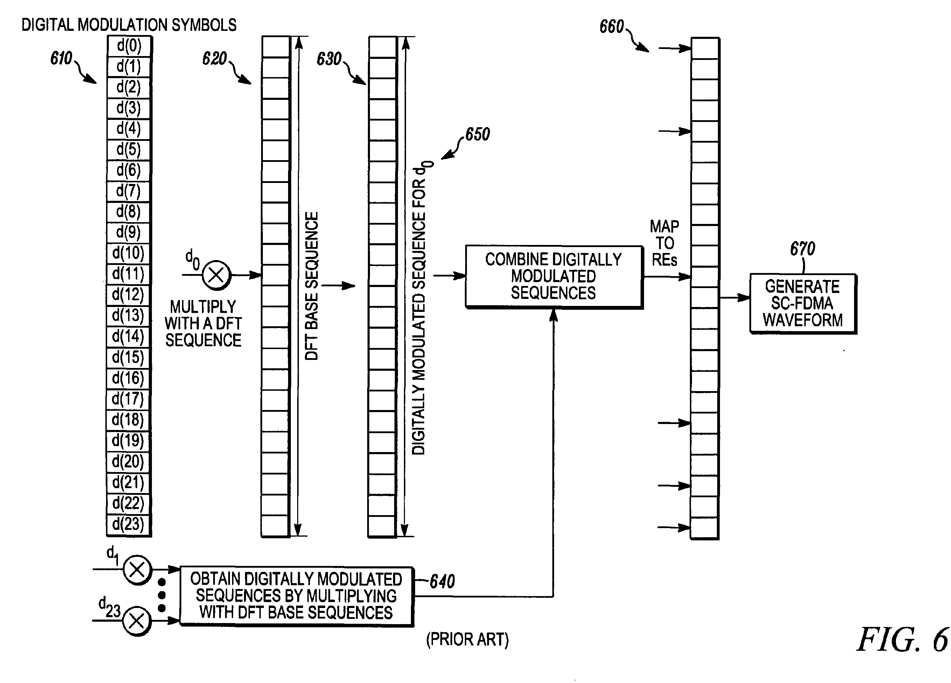

Two types of base sequences are used in 3GPP LTE Rel-8. In the case of LTE Rel-8 PUCCH (Physical Uplink Control Channel) transmission, illustrated in FIG. 4, the base sequence is a cyclic shifted version of a PSK sequence. A digital modulation symbol 410 is multiplied by a QPSK base sequence 420 to form a digitally modulated sequence 430. Such a digitally modulated sequence is mapped to the set of consecutive subcarriers 440. In the case of LTE Rel-8 Physical Uplink Shared Channel (PUSCH) transmission, the base sequence is a DFT sequence. In FIG. 6, each symbol of a set of digital modulation symbols 610 is multiplied by a DFT base sequence 620 to form a digitally modulated sequence 630. Multiple digital modulated sequences are then superposed in 650, before being mapped to the set of consecutive subcarriers 660. FIG. 6 will be explained more fully below.

In a typical operation, in FIG. 4, the length of a base sequence 420 is equal to the number of the resource elements (REs) 440. Further, the number of digitally modulated sequences, corresponding to the number of modulation symbols that can be sent on a set of subcarriers on an SC-FDMA symbol, which also corresponds to the maximal number of base sequences that can be sent on this set of REs in an SC-FDMA symbol, is less than or equal to that of the length of the QPSK base sequence.

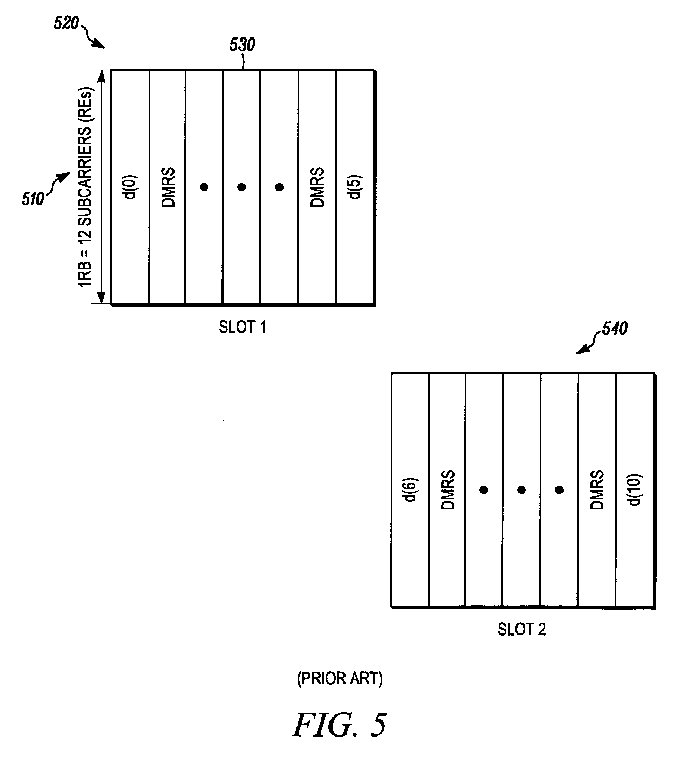

FIG. 5 illustrates conveying multiple digital modulation symbols using a physical uplink channel (PUCCH). In LTE, the base unit performs scheduling functions, which include the allocation of time and/or frequency resources for data and control communications. The scheduler allocates an uplink control channel to one or more remote units for communicating hybrid ARQ feedback (ACK/NACK), channel quality feedback (CQI), a rank indicator (RI), a precoding matrix indicator (PMI) among other control information. In other systems other control information may be communicated on the uplink control channel. In LTE systems, the uplink control information is communicated on the PUCCH. More generally, uplink control information may also be communicated on some other channel. In LTE, for example, control information may also be communicated on the physical uplink shared channel (PUSCH). In LTE, the PUCCH and PUSCH are designed to allow simultaneous uplink transmissions from multiple remote units in the wireless communication system. Such simultaneous communication is implemented by orthogonal coding of the uplink communications transmitted by each remote unit.

The PUCCH is implemented using a narrowband frequency resource within a wideband frequency resource wherein the PUCCH includes a pair of uplink control resource blocks separated within the wideband frequency resource. Locating the pair of uplink resource blocks near or at opposite edges of a wideband frequency resource provides diversity and avoids fragmentation of the resource block allocation space used for data traffic transmissions (i.e., PUSCH). The downlink and uplink bandwidth are sub-divided into resource blocks, wherein each resource block (RB) comprises one or more sub-carriers. A resource block is a typical unit in which the resource allocations are assigned for the uplink and downlink communications. In LTE, a resource block comprises 12 consecutive subcarriers for a duration of a slot (0.5 ms) comprising a number of OFDM or SC-FDMA symbols, for example 7 symbols. Two slots form a subframe of 1ms duration, and ten subframes comprise a 10 millisecond (ms) radio frame. In FIG. 5, four symbols 530 in a subframe are allocated to demodulation reference symbols (DMRS). This leaves 10 symbols 520 to convey information. In one example, a total of 10 digital modulation symbols can be transmitted as in FIG. 5.

In LTE PUSCH, a set of resource elements (REs) 650 contains 12xN_RB consecutive subcarriers spanning N_RB consecutive resource blocks (RBs). A particular example of PUSCH mapping with N_RB =2 is shown in FIG. 6. The length of the corresponding base sequence 620 is 12xN_RB and up to 12xN_RB (=24 in this example) base sequences can be used for modulation. A digitally modulated QPSK/16QM/64QAM symbol d(i) is multiplied by one of the DFT base sequences 620 to form a digitally modulated sequence 630, which is mapped to the set of REs 660. As many as 12xN_RB digitally modulated sequences 640 can be formed and superposed as in 650 to transmit up to 12xN_RB digital modulation symbols 610 on the set of REs 660.

With PUSCH, 12xN_RB digital modulation symbols can be transmitted using a set of 12xN_RB resource elements in a single SC-FDMA symbol. PUSCH allocation spans 12xN_RB subcarriers in frequency and 1 subframe with 14 symbols in time. Two SC-FDMA symbols are allocated to reference symbols, which leaves 12 symbols. Hence a total of 12x(12xN_RB) digital modulation symbols can be transmitted in a PUSCH allocation of N_RBs. In another embodiment, the number of SC-FDMA symbols for PUSCH data transmission may be different than 12, for example 11 in case one symbol in the subframe is reserved for sounding reference signal transmission.

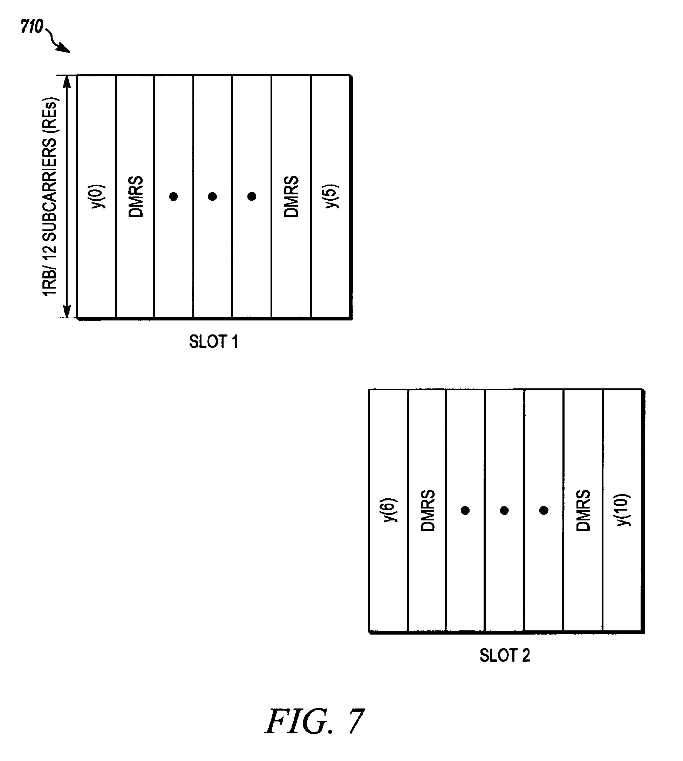

An example of spatial covariance feedback using PUCCH is illustrated in FIG. 7. Directly modulated sequences that are obtained based on a set of transmitted coefficients $[y_1,y_2,....y_{10}]$ 710 can be mapped to one PUCCH. The symbols mapped to individual REs in the data SC-FDMA symbols are obtained as

$$z(12n+i) = y(n).r^{\alpha}(i) \qquad (1.7)$$

where $r^{\alpha}(.)$ is the QPSK base sequence with cyclic shif $\alpha$, and $y(n)$ are the transmitted coefficients. Each transmitted coefficient $y(i)$ is used in place of a digital modulation symbol $d(i)$ illustrated in FIG. 5 to get a length-12 directly modulated sequence, which is then mapped to a set of 12 REs in one symbol of SC-FDMA. In one embodiment, the transmitted coefficients $y(i)$ could be the 10 normalized unique coefficients of a covariance matrix, or a transformation of these entries.

A similar principle can always be applied by replacing a digitally modulated sequence in FIG. 6 with a directly modulated sequence. Directly modulated and digitally modulated sequences may be combined together for transmission on PUCCH. In other words, a transmission coefficient can be used to replace one or more of modulation symbols d(i) (i.e., 320) in PUCCH.

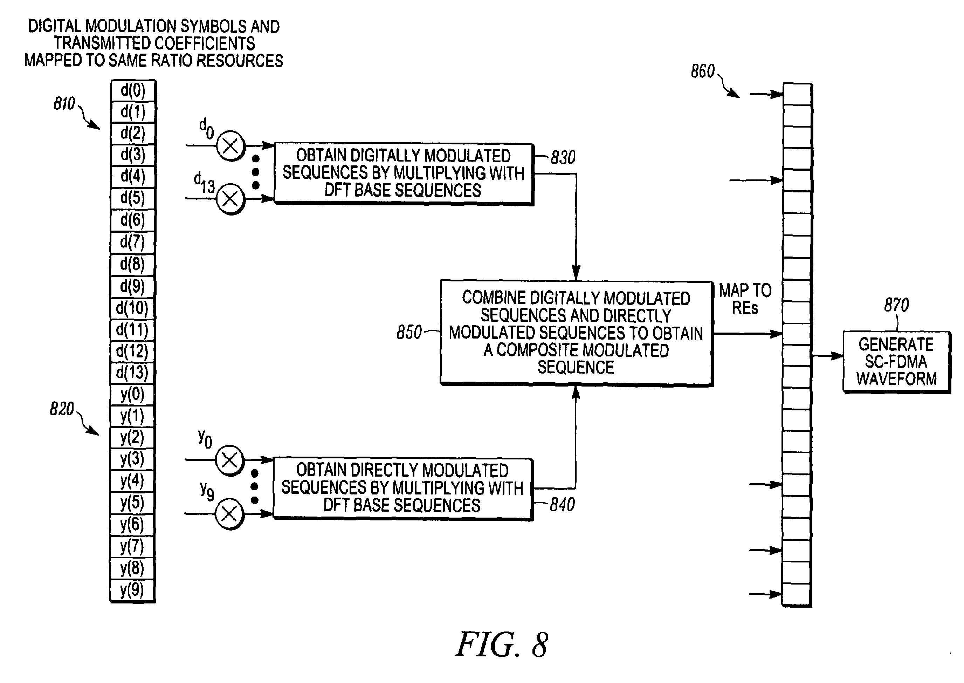

In case of PUSCH, FIG. 8 illustrates how transmission coefficients may be transmitted together with other digital modulation symbols for an example of N_RB=2 similar to FIG. 6. In FIG. 8, a set of digital modulation symbols 810 and transmitted coefficients 820 are conveyed on a set of 12xN_RB REs in an SC-FDMA data symbol. The digital modulated symbols are multiplied by corresponding base sequences to obtain digitally modulated sequences in 830. The transmitted coefficients are multiplied with corresponding base sequences to obtain a set of directly modulated sequences. In 850, both types of modulated sequences are combined to obtain a composite modulation sequence, which is mapped to a set of 12xN_RB REs in 860.

As explained above, a PUSCH allocation can use 12 SC-FDMA symbols, each with 12xN_RB REs. A combination of transmission coefficients and digital modulation symbols can be conveyed in each set of 12xN_RB REs corresponding to each SC-FDMA symbol. In another embodiment, the transmission coefficients and digital modulation symbols may be mapped to different SC-FDMA symbols.

Some parameters extracted from R or channel state information may be suitable for quantization and then conveyed using digital modulation, which is referred to "digital feedback" herein. With digital feedback, a parameter is quantized and mapped to a bit pattern, which is optionally coded, then modulated using a finite constellation (e.g., QPSK, 16QAM, 64QAM) to obtain digital modulation symbols.

The scaling factor of the spatial covariance matrix, for example, is suitable for digital feedback. The number of bits mapped could be selected as a function of the dynamic range of such parameters and the desired accuracy. For example, if $\gamma$ is a scaling factor corresponding to SNR, a 5-bit mapping with 32 levels, equally spaced with 1 dB increments over a range of 32 dB can be used. As another example, Eigenvalues can also be transmitted using digital modulation. In general, parameters extracted from R or channel state information with a larger dynamic range are suitable for digital modulation.

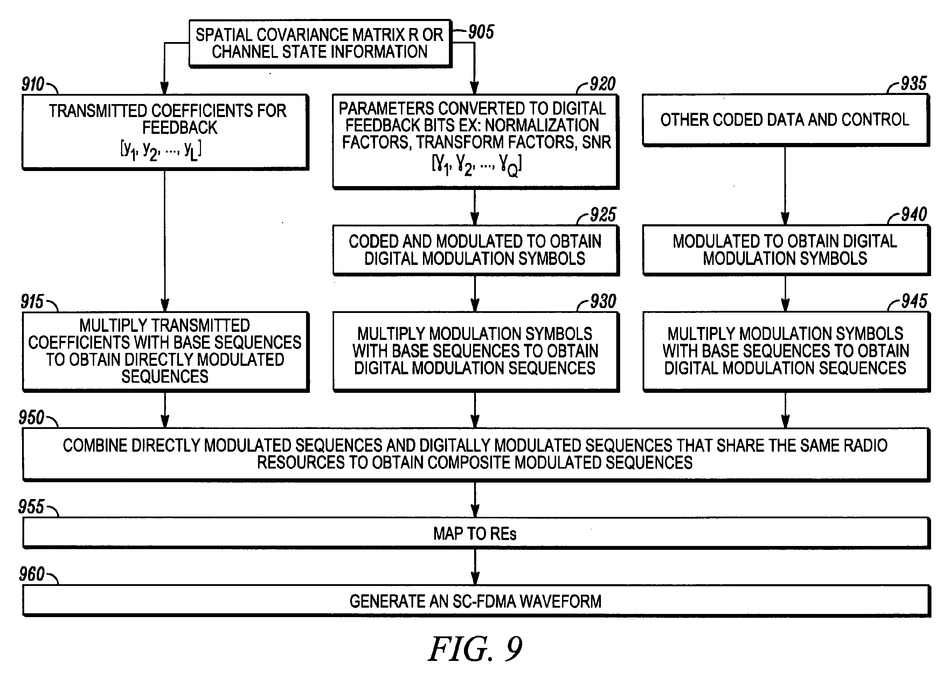

An embodiment of transmitting spatial covariance or channel state information is illustrated in FIG. 9. Transmitted coefficients 910 and parameters for digital feedback 920 are obtained from spatial covariance matrix 905. Transmitted coefficients 910 are multiplied with base sequences to obtain directly modulated sequences in 915. Information bits obtained from parameters for digital feedback in 920 are then coded and modulated to obtain digital modulation symbols 925, which are multiplied with base sequences to obtain a set of digital modulation sequences. Other coded data and control information in 935 is modulated to obtain other digital modulation symbols in 940 and multiplied with base sequences to obtain other digital modulation sequences in 945. The directly modulated sequences 915 and digitally modulated sequences 930 and 945 are combined on a set of radio resource elements to obtain composite modulation sequence, which is mapped to a set of REs. More generally, more than one composite modulation sequence can be obtained, by combining subsets of sequences 915, 930, 945. These can be mapped to multiple non-overlapping sets of REs. An example of such non-overlapping sets is PUSCH, where each composite sequence is mapped to a set of 12xN_RB set of RBs in a SC-FDMA symbol. It may be understood that in some instances, transmitted coefficients, digital feedback information, coded user data, and/or other control information may not be simultaneously present.

In another embodiment, for transmitted coefficients 910 in FIG. 9, a channel quality dependent repetition factor $\alpha_R^{offset}$ may be used, in which case the transmitted coefficient will be transmitted multiple times. This repetition factor may be indicated to the remote unit by a higher layer configuration message such as an RRC configuration message, which may be a dedicated message. Alternatively, the repetition factor can be signaled in Downlink Control Information (DCI) formats for more dynamic control. The repetition factor may be a function of the data MCS in case data transmission is also scheduled for the remote unit in the same subframe. With repetition, the quality of the repeated transmitted coefficient can be improved. Repetition can be implemented by simply repeating the transmitting coefficients $\alpha_R^{offset}$ time to obtain an expanded set of transmission coefficients before obtaining digital modulation sequences. Alternatively, the repetition can be implemented by spreading with a spreading code (such as Walsh or DFT code).

In another variation of the embodiment described above, digital information bits derived from covariance matrix in 920 may be coded with other data and control information (like CQI etc.,) before modulation to obtain digital modulation symbols in 930.

In one embodiment, the coding parameters used for digital feedback based on covariance matrix or channel state information, as in 920 in FIG. 9 described above can also be derived based on channel quality. Such channel quality can be derived implicitly. For example, using a fixed offset $\beta_R^{offset}$ to the data MCS, depending on feedback requirements on reception quality relative to data. Such an approach is already supported in Release-8 for Channel Quality Information (CQI), HARQ-ACK and rank indicator (RI) feedback, where the coding parameters for transmission are derived from data coding and modulation parameters. Such offset parameter can be signaled by a higher layer configuration message such as an RRC configuration message or in DCI on the PDCCH. For example, the code rate for these feedback bits from R, can be obtained as

$$Rate_{Rf} = \frac{Rate_{data}}{\beta_R^{offset}} \tag{1.8}$$

In another embodiment, the feedback information bits derived from spatial covariance or channel state information, may be jointly coded along with other CQI information, in which case a different offset factor suitable to other CQI information may be used. For example, an offset factor is defined in the LTE Rel-8 specification for existing binary coded CQI, PMI and RI.

In LTE Rel-8, while PUCCH is often used for feedback of control information when there is no data transmission from the remote unit, feedback on PUSCH allows multiplexing feedback information with data and supports transmission of a larger number of modulation symbols. In future LTE systems, simultaneous transmission of control information on PUCCH (or similar channels) and PUSCH may be supported. In LTE Rel-8, the type of feedback supported with PUSCH includes CQI, PMI, RI, HARQ-ACK, etc. This information is individually and/or jointly coded such as joint coding of CQI and PMI, and individual coding of RI and HARQ-ACK, modulated and then multiplexed with the remote unit's data. The multiplexing can be performed with a channel interleaver.

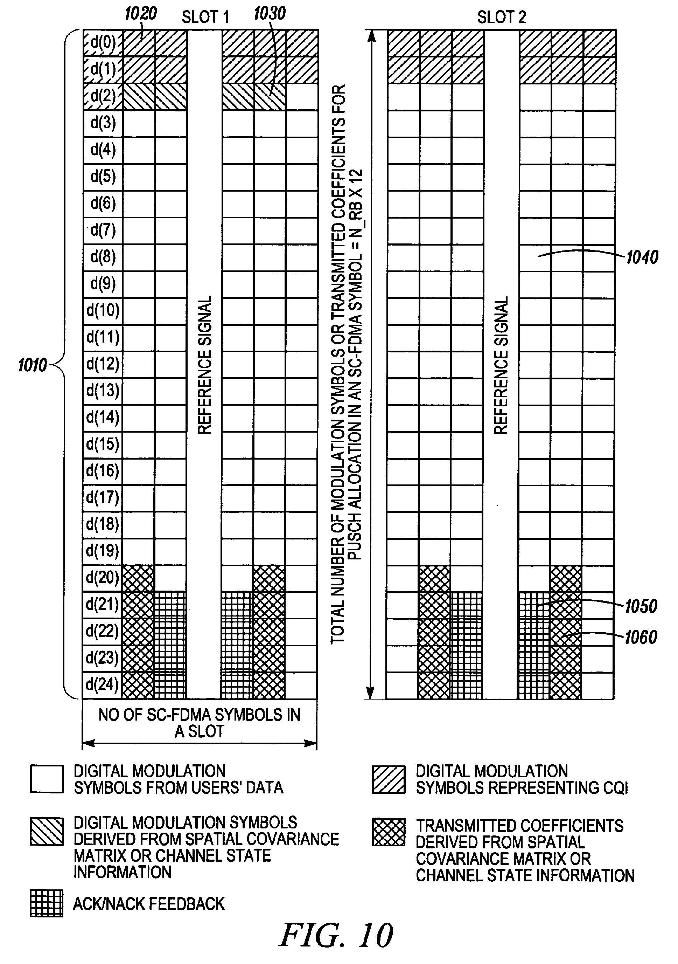

For describing this multiplexing, a channel interleaver matrix is illustrated in FIG. 10, of size (12xN_RB)xM, where N_RB is the number of RBs in PUSCH allocation and M is the number of SC-FDMA symbols in a subframe allocated to data (typically 12 subtracting 2 for reference signals in PUSCH). With N_RB = 2, this matrix can be described as having 24 rows, and 12 columns, each column representing digital modulation symbols or transmission coefficients conveyed using a single SC-FDMA symbol. Every fourth SC-FDMA symbol in each slot is reserved for an RS. So a 2 RB allocation contributes 24x12 = 288 matrix elements that can be assigned to digital modulation symbols or transmitted coefficients. After obtaining this matrix, all the digital modulation symbols and transmitted coefficients 811 corresponding to a single SC-FDMA symbol (single column) are processed as illustrated in FIG. 6 or in FIG. 8.

As is depicted in FIG. 8, each transmitted coefficient or a digital modulation symbol is multiplied with a DFT sequence of length 2x12=24 to obtain a digitally or directly modulated sequence and mapped onto the set of 2x12=24 subcarriers. The transmitted coefficient or digital modulation symbol mapped to a base sequence is depicted as a matrix element in FIG. 10. A matrix element is DFT-precoded with a DFT base sequence.

FIG. 10 also illustrates mapping of transmitted coefficients 1060 digital modulation symbols 1030 derived from a spatial covariance matrix or channel state information on to PUSCH along with other data 1040 and control information 1020 and 1050. The other feedback information shown is the currently supported feedback information in Rel-8 LTE like HARQ-ACK, RI etc. Some of this feedback may be replaced. For example, there may be no need for rank feedback if covariance matrix feedback is supported. The transmitted coefficients (y(i)) are mapped as shown in place of existing rank indicator (RI) information (not shown) two SC-FDMA symbols away on both sides of the reference signals. The locations in the matrix to which these coefficients are mapped as shown for illustrative purposes only. Generally they can be mapped to other locations. The mapping may take into account other performance related metrics like PUCCH power dynamic range, estimation reliability etc. The digital feedback extracted from spatial covariance matrix or channel state information may be separately coded and appended at the end of CQI as shown in 1030 or jointly coded with existing CQI information. More generally, it may be allocated to other locations in the matrix such as towards the ends of the matrix.

The design of the channel interleaver may provide for symmetric locations of transmitted coefficients to both the slots in the RB to maximize frequency diversity. Further, they may be mapped to improve their estimation reliability and/or to minimize the peak-to-average ratio (PAPR) of the uplink SC-FDMA waveform.

In the above embodiments, the subcarriers assigned to a PUSCH region in a symbol may be contiguous, as in LTE. In a variation of these embodiments, a PUSCH region may be defined as a combination of multiple resource blocks of such contiguous subcarriers. At least two resource blocks may not be non-contiguous. In general, these blocks could be a single RB or a group of RBs, i.e., a resource block group (RBG) as defined in the downlink of LTE Rel-8. In addition, a PUCCH region and PUSCH region may be allowed to be transmitted together by a user in a future revision of the specification (not allowed in LTE Rel-8). It can be understood the methodologies described herein apply to such cases. The transmitted coefficients and the digital information derived from spatial covariance matrix can be split and transmitted on one or more of such blocks and share the resources with other digitally modulated symbols based on other data or control.

In general, as discussed above, the spatial information feedback can be requested by a base unit on a frequency selective basis, in other words, many instances of such information can be requested relevant to different subbands in frequency, where a subband is a set of contiguous subcarriers. This may, for example, be desired if a user can support higher feedback overhead on the uplink, to obtain frequency selective gains on the downlink.

In another embodiment, if a simultaneous request of information of more than one covariance matrix is requested, the coefficients from all the matrices can be combined and the transformations described above for a single covariance matrix may be used without loss of generality.

In the above embodiments, the term radio resource elements can include OFDM /SC-FDMA sub-carriers, OFDM/SC-FDMA symbols, chips in CDMA etc. Also, the term "transformation" of at least one feedback coefficient can include scrambling, scaling or any other modification to the feedback coefficient.

While the present disclosure and the best modes thereof have been described in a manner establishing possession and enabling those of ordinary skill to make and use the same, it will be understood and appreciated that modifications and variations may be made thereto without departing from the scope of the invention, which are to be limited not by the exemplary embodiments but by the appended claims.

## Claims

1. A method in a wireless communication unit, the method comprising:

   obtaining a first channel corresponding to a first transmit antenna and a second channel corresponding to a second transmit antenna based on a channel measured on a first set of two or more subcarriers corresponding to a waveform received at the wireless communication unit, said channels being represented by channel coefficients,
   the first and second transmit antennas are associated with a transmitter transmitting the waveform received at the wireless communication unit;
   generating a transmission waveform at the wireless communication unit,
   the transmission waveform based on a mapping of at least one directly-modulated sequence to a set of radio resource elements,
   the at least one directly-modulated sequence is a product of at least one transmitted coefficient and a corresponding base sequence, the at least one transmitted coefficient is based on the first and second channels;
   transmitting the transmission waveform from a transceiver of the wireless communication unit.

2. The method of Claim 1 further comprising obtaining the at least one transmitted coefficient from at least one spatial covariance matrix formed from at least one correlation between the first channel and the second channel.

3. The method of Claim 2 further comprising obtaining the at least one transmitted coefficient from at least one feedback coefficient derived from the at least one spatial covariance matrix.

4. The method of Claim 3, wherein the at least one transmitted coefficient corresponds to the at least one feedback coefficient.

5. The method of Claim 3, wherein the at least one transmitted coefficient corresponds to a transformation of the at least one feedback coefficient.

6. The method of Claim 3, wherein the at least one transmitted coefficient corresponds to a transformation of the at least one feedback coefficient scrambled by a sequence.

7. The method of Claim 3, deriving the at least one feedback coefficient from the at least one spatial covariance matrix, wherein the at least one feedback coefficient corresponds to at least one scaled coefficient of the at least one spatial covariance matrix.

8. The method of Claim 3, deriving the at least one feedback coefficient from the at least one spatial covariance matrix, wherein the at least one feedback coefficient corresponds to at least one Eigen vector, the at least one Eigen vector is derived based on the at least one spatial covariance matrix.

9. The method of Claim 1, combining two or more directly-modulated sequences to obtain a single directly-modulated sequence that is mapped to the set of radio resource elements.

10. The method of Claim 1, mapping a plurality of directly-modulated sequences onto non-overlapping resource elements of the set of radio resource elements.

11. The method of Claim 1 further comprising combining the at least one directly-modulated sequence with at least one digitally modulated sequence to obtain a composite modulated sequence that is mapped to the set of radio resource elements, wherein the at least one digitally modulated sequence is the product of at least one digital modulation symbol and a corresponding base sequence.

12. The method of Claim 1 further comprising obtaining the at least one transmitted coefficient from the channel state information of at least one of the first or second channel.

13. A wireless communication unit comprising:

a transceiver;
a controller coupled to the transceiver,
the controller configured to generate (870,960) a transmission waveform
the transmission waveform generated based on a mapping (860,955) of at least one directly-modulated sequence to a set of radio resource elements,
the at least one directly-modulated sequence is a product of at least one transmitted coefficient and a corresponding base sequence (830-850,950), the at least one transmitted coefficient is based on a first channel corresponding to a first transmit antenna and a second channel corresponding to a second transmit antenna, said channels being represented by channel coefficients,
the first and second channels based on a channel measured on a first set of two or more subcarriers corresponding to a waveform received at the wireless communication unit,
the transceiver configured to transmit the transmission waveform.

14. The unit of Claim 15, the controller is configured to obtain the at least one transmitted coefficient from at least one spatial covariance matrix formed from the at least one correlation between the first channel and the second channel.

15. The unit of Claim 13, the controller is configured to combine two or more sequences from the set of at least one directly-modulated sequences and at least one digitally modulated sequence to obtain a composite modulated sequence that is mapped to the set of radio resource elements, wherein the at least one digitally modulated sequence is the product of at least one digital modulation symbol and a corresponding base sequence.

**Patentansprüche**

1. Verfahren in einer drahtlosen Kommunikationseinheit, wobei das Verfahren Folgendes umfasst:

Erhalt eines ersten Kanals, der einer ersten Sendeantenne entspricht, und eines zweiten Kanals, der einer zweiten Sendeantenne entspricht, basierend auf einem Kanal, gemessen auf einem ersten Satz von zwei oder mehreren Unterträgern, die einer Wellenform entsprechen, die an der drahtlosen Kommunikationseinheit empfangen wurde, wobei die Kanäle von Kanalkoeffizienten dargestellt werden,

wobei die erste und die zweite Sendeantenne mit einem Transmitter assoziiert sind, der die Wellenform überträgt, die von der drahtlosen Kommunikationseinheit empfangen wurde,

Generierung einer Übertragungswellenform an der drahtlosen Übertragungseinheit,

wobei die Übertragungswellenform auf einer Abbildung von mindestens einer direkt modulierten Sequenz auf einem Satz von Funkressourcenelementen basiert,

wobei die mindestens eine direkt modulierte Sequenz ein Produkt mindestens eines übertragenen Koeffizienten und einer entsprechenden Basissequenz ist, wobei der mindestens eine übertragene Koeffizient auf dem ersten und dem zweiten Kanal basiert;

Übertragung der Übertragungswellenform von einem Transceiver der drahtlosen Kommunikationseinheit.

2. Verfahren nach Anspruch 1, weiter umfassend Erhalt des mindestens einen übertragenen Koeffizienten von mindestens einer räumlichen Kovarianzmatrix, gebildet aus mindestens einer Korrelation zwischen dem ersten Kanal und dem zweiten Kanal.

3. Verfahren nach Anspruch 2, weiter umfassend Erhalt des mindestens einen übertragenen Koeffizienten von mindestens einem Rückmeldungs-Koeffizienten, abgeleitet von der mindestens einen räumlichen Kovarianzmatrix.

4. Verfahren nach Anspruch 3, wobei der mindestens eine übertragene Koeffizient dem mindestens einen Rückmeldungs-Koeffizienten entspricht.

5. Verfahren nach Anspruch 3, wobei der mindestens eine übertragene Koeffizient einer Umwandlung des mindestens einen Rückmeldungs-Koeffizienten entspricht.

6. Verfahren nach Anspruch 3, wobei der mindestens eine übertragene Koeffizient einer Umwandlung des mindestens einen Rückmeldungs-Koeffizienten, verwürfelt durch eine Sequenz, entspricht.

7. Verfahren nach Anspruch 3, das den mindestens einen Rückkoppelungs-Koeffizienten von der mindestens einen räumlichen Kovarianzmatrix ableitet, wobei der mindestens eine Rückkoppelungs-Koeffizient mindestens einem maßstabsgerechten Koeffizienten der mindestens einen räumlichen Kovarianzmatrix entspricht.

8. Verfahren nach Anspruch 3, das den mindestens einen Rückkoppelungs-Koeffizienten von der mindestens einen räumlichen Kovarianzmatrix ableitet, wobei der mindestens eine Rückkoppelungs-Koeffizient mindestens einem Eigenvektor entspricht, wobei der mindestens eine Eigenvektor basierend auf der mindestens einen räumlichen Kovarianzmatrix abgeleitet ist.

9. Verfahren nach Anspruch 1, das zwei oder mehr direkt modulierte Sequenzen kombiniert, um eine einzige direkt modulierte Sequenz zu erhalten, die auf dem Satz von Funkressourcenelementen abgebildet ist.

10. Verfahren nach Anspruch 1, das eine Vielzahl von direkt modulierten Sequenzen auf nicht überlappende Ressourcenelemente des Satzes von Funkressourcenelementen abbildet.

11. Verfahren nach Anspruch 1, weiter umfassend Kombination der mindestens einen direkt modulierten Sequenz mit mindestens einer digital modulierten Sequenz, um eine verbundene modulierte Sequenz zu erhalten, die auf dem Satz von Funkressourcenelementen abgebildet ist, wobei die mindestens eine digital modulierte Sequenz das Produkt mindestens eines digitalen Modulationssymbols und einer entsprechenden Basissequenz ist.

12. Verfahren nach Anspruch 1, weiter umfassend Erhalt des mindestens einen übertragenen Koeffizienten von der Kanalzustandsinformation mindestens eines des ersten oder des zweiten Kanals.

13. Drahtlose Kommunikationseinheit, umfassend:

einen Transceiver;
eine Steuerungseinheit, die mit dem Transceiver gekoppelt ist,
wobei die Steuerungseinheit konfiguriert ist, um eine Übertragungswellenform zu generieren (870, 960),

wobei die Übertragungswellenform basierend auf einer Abbildung (860, 955) von mindestens einer direkt modulierten Sequenz auf einem Satz von Funkressourcenelementen generiert wird,

wobei die mindestens eine direkt modulierte Sequenz ein Produkt mindestens eines übertragenen Koeffizienten und einer entsprechenden Basissequenz (830 - 850, 950) ist, wobei der mindestens eine übertragene Koeffizient auf einem ersten Kanal basiert, der einer ersten Sendeantenne entspricht, und einem zweiten Kanal, der einer zweiten Sendeantenne entspricht, wobei die Kanäle von Kanalkoeffizienten dargestellt werden,

wobei der erste und der zweite Kanal auf einem Kanal basieren, gemessen auf einem ersten Satz von zwei oder mehreren Unterträgern, die einer Wellenform entsprechen, die an der drahtlosen Kommunikationseinheit empfangen wurde,

wobei der Transceiver konfiguriert ist, um die Übertragungswellenform zu übertragen.

**14.** Einheit nach Anspruch 15, wobei die Steuerungsvorrichtung konfiguriert ist, um den mindestens einen übertragenen Koeffizienten von mindestens einer räumlichen Kovarianzmatrix zu erhalten, gebildet aus der mindestens einer Korrelation zwischen dem ersten Kanal und dem zweiten Kanal.

**15.** Einheit nach Anspruch 13, wobei die Steuerungsvorrichtung konfiguriert ist, um zwei oder mehrere Sequenzen vom Satz von mindestens einer direkt modulierten Sequenz und mindestens einer digital modulierten Sequenz zu kombinieren, um eine verbundene modulierte Sequenz zu erhalten, die auf dem Satz von Funkressourcenelementen abgebildet ist, wobei die mindestens eine digital modulierte Sequenz das Produkt mindestens eines digitalen Modulationssymbols und einer entsprechenden Basissequenz ist.

## Revendications

**1.** Procédé dans une unité de communication sans fil, le procédé comprenant :

obtenir un premier canal correspondant à une première antenne d'émission et un second canal correspondant à une seconde antenne d'émission sur la base d'un canal mesuré sur un premier ensemble de deux sous-porteuses ou plus correspondant à une forme d'onde reçue au niveau de l'unité de communication sans fil, lesdits canaux étant représentés par des coefficients de canal, les première et seconde antennes d'émission sont associées à un émetteur émettant la forme d'onde reçue au niveau de l'unité de communication sans fil ; générer une forme d'onde d'émission au niveau de l'unité de communication sans fil, la forme d'onde d'émission étant basée sur un mappage d'au moins une séquence directement modulée sur un ensemble d'éléments de ressource radio, l'au moins une séquence directement modulée est un produit d'au moins un coefficient émis et d'une séquence de base correspondante, l'au moins un coefficient émis est basé sur les premier et second canaux ; émettre la forme d'onde d'émission à partir d'un émetteur-récepteur de l'unité de communication sans fil.

**2.** Procédé selon la revendication 1, comprenant en outre obtenir l'au moins un coefficient émis à partir d'au moins une matrice de covariance spatiale formée à partir d'au moins une corrélation entre le premier canal et le second canal.

**3.** Procédé selon la revendication 2, comprenant en outre obtenir l'au moins un coefficient émis à partir d'au moins un coefficient de rétroaction dérivé à partir de l'au moins une matrice de covariance spatiale.

**4.** Procédé selon la revendication 3, dans lequel l'au moins un coefficient émis correspond à l'au moins un coefficient de rétroaction.

**5.** Procédé selon la revendication 3, dans lequel l'au moins un coefficient émis correspond à une transformation de l'au moins un coefficient de rétroaction.

**6.** Procédé selon la revendication 3, dans lequel l'au moins un coefficient émis correspond à une transformation de l'au moins un coefficient de rétroaction brouillé par une séquence.

**7.** Procédé selon la revendication 3, dérivant l'au moins un coefficient de rétroaction à partir de l'au moins une matrice de covariance spatiale, l'au moins un coefficient de rétroaction correspondant à au moins un coefficient mis à l'échelle de l'au moins une matrice de covariance spatiale.

**8.** Procédé selon la revendication 3, dérivant l'au moins un coefficient de rétroaction à partir de l'au moins une matrice de covariance spatiale, l'au moins un coefficient de rétroaction correspondant à au moins un vecteur propre, l'au moins un vecteur propre étant dérivé sur la base de l'au moins une matrice de covariance spatiale.

**9.** Procédé selon la revendication 1, combinant deux séquences directement modulées ou plus pour obtenir une seule séquence directement modulée qui est mappée sur l'ensemble d'éléments de ressource radio.

**10.** Procédé selon la revendication 1, mappant une pluralité de séquences directement modulées sur des éléments de ressource ne se chevauchant pas parmi l'ensemble d'éléments de ressource radio.

**11.** Procédé selon la revendication 1, comprenant en outre combiner l'au moins une séquence directement modulée avec au moins une séquence modulée de manière numérique pour obtenir une séquence modulée composite qui est mappée sur l'ensemble d'éléments de ressource radio, l'au moins une séquence modulée de manière numérique étant le produit d'au moins un symbole de modulation numérique et d'une séquence de base correspondante.

**12.** Procédé selon la revendication 1, comprenant en outre obtenir l'au moins un coefficient émis à partir des informations d'état de canal d'au moins l'un du premier ou du second canal.

**13.** Unité de communication sans fil comprenant :

un émetteur-récepteur ;
un contrôleur couplé à l'émetteur-récepteur,
le contrôleur étant configuré pour générer (870, 960) une forme d'onde d'émission,
la forme d'onde d'émission étant générée sur la base d'un mappage (860, 955) d'au moins une séquence directement modulée sur un ensemble d'éléments de ressource radio,
l'au moins une séquence directement modulée étant un produit d'au moins un coefficient émis et d'une séquence de base correspondante (830-850, 950), l'au moins un coefficient émis étant basé sur un premier canal correspondant à une première antenne d'émission et un second canal correspondant à une seconde antenne d'émission, lesdits canaux étant représentés par des coefficients de canal,
les premier et second canaux étant basés sur un canal mesuré sur un premier ensemble de deux sous-porteuses ou plus correspondant à une forme d'onde reçue au niveau de l'unité de communication sans fil,
l'émetteur-récepteur étant configuré pour émettre la forme d'onde d'émission.

**14.** Unité selon la revendication 15, le contrôleur étant configuré pour obtenir l'au moins un coefficient émis à partir d'au moins une matrice de covariance spatiale formée à partir de l'au moins une corrélation entre le premier canal et le second canal.

**15.** Unité selon la revendication 13, le contrôleur étant configuré pour combiner deux séquences ou plus parmi l'ensemble d'au moins une séquence directement modulée et d'au moins une séquence modulée de manière numérique pour obtenir une séquence modulée composite qui est mappée sur l'ensemble d'éléments de ressource radio, dans laquelle l'au moins une séquence modulée de manière numérique est le produit d'au moins un symbole de modulation numérique et d'une séquence de base correspondante.

*101* BASE UNIT

*103* REMOTE UNIT

*102* BASE UNIT

*104* REMOTE UNIT

## *FIG. 1*

*210* PROCESSOR

*212* MEMORY

*218* INPUT/ OUTPUT INTERFACE

*214* DATABASE

*216* TRANSCEIVER

## *FIG. 2*

300

310
OBTAIN TRANSMITTED COEFFICIENTS BASED ON A FIRST CHANNEL CORRESPONDING TO A FIRST TRANSMIT ANTENNA AND A SECOND CHANNEL CORRESPONDING TO A SECOND TRANSMIT ANTENNA

320
MULTIPLY TRANSMITTED COEFFICIENTS BY CORRESPONDING BASE SEQUENCES TO OBTAIN A SET OF DIRECTLY MODULATED SEQUENCES

330
MAP THE DIRECTLY MODULATED SEQUENCES TO A SET OF RADIO RESOURCE ELEMENTS

340
GENERATE A TRANSMISSION WAVEFORM

*FIG. 3*

(PRIOR ART)

*FIG. 4*

(PRIOR ART)

*FIG. 5*

DIGITAL MODULATION SYMBOLS

610
620
630
650
640
660
670

COMBINE DIGITALLY MODULATED SEQUENCES

MAP TO REs

GENERATE SC-FDMA WAVEFORM

MULTIPLY WITH A DFT SEQUENCE

OBTAIN DIGITALLY MODULATED SEQUENCES BY MULTIPLYING WITH DFT BASE SEQUENCES

DFT BASE SEQUENCE

DIGITALLY MODULATED SEQUENCE FOR $d_0$

(PRIOR ART)

*FIG. 6*

EP 2 409 462 B1

710

1RB/ 12 SUBCARRIERS (REs)

| y(0) | DMRS | • | • | • | DMRS | y(5) |

SLOT 1

| y(6) | DMRS | • | • | • | DMRS | y(10) |

SLOT 2

*FIG. 7*

DIGITAL MODULATION SYMBOLS AND
TRANSMITTED COEFFICIENTS
MAPPED TO SAME RATIO RESOURCES

810

| d(0) |
| d(1) |
| d(2) |
| d(3) |
| d(4) |
| d(5) |
| d(6) |
| d(7) |
| d(8) |
| d(9) |
| d(10) |
| d(11) |
| d(12) |
| d(13) |

820

| y(0) |
| y(1) |
| y(2) |
| y(3) |
| y(4) |
| y(5) |
| y(6) |
| y(7) |
| y(8) |
| y(9) |

$d_0$ ⊗

$d_{13}$ ⊗

OBTAIN DIGITALLY MODULATED
SEQUENCES BY MULTIPLYING WITH
DFT BASE SEQUENCES — 830

$y_0$ ⊗

$y_9$ ⊗

OBTAIN DIRECTLY MODULATED
SEQUENCES BY MULTIPLYING WITH
DFT BASE SEQUENCES — 840

850 — COMBINE DIGITALLY MODULATED
SEQUENCES AND DIRECTLY
MODULATED SEQUENCES TO OBTAIN
A COMPOSITE MODULATED
SEQUENCE

MAP TO
REs

860

870

GENERATE
SC-FDMA
WAVEFORM

EP 2 409 462 B1

23

*FIG. 8*

EP 2 409 462 B1

SPATIAL COVARIANCE MATRIX R OR CHANNEL STATE INFORMATION — $905$

$910$ — TRANSMITTED COEFFICIENTS FOR FEEDBACK $[y_1, y_2, ..., y_L]$

$920$ — PARAMETERS CONVERTED TO DIGITAL FEEDBACK BITS EX: NORMALIZATION FACTORS, TRANSFORM FACTORS, SNR $[Y_1, Y_2, ..., Y_Q]$

$935$ — OTHER CODED DATA AND CONTROL

$925$ — CODED AND MODULATED TO OBTAIN DIGITAL MODULATION SYMBOLS

$940$ — MODULATED TO OBTAIN DIGITAL MODULATION SYMBOLS

$915$ — MULTIPLY TRANSMITTED COEFFICIENTS WITH BASE SEQUENCES TO OBTAIN DIRECTLY MODULATED SEQUENCES

$930$ — MULTIPLY MODULATION SYMBOLS WITH BASE SEQUENCES TO OBTAIN DIGITAL MODULATION SEQUENCES

$945$ — MULTIPLY MODULATION SYMBOLS WITH BASE SEQUENCES TO OBTAIN DIGITAL MODULATION SEQUENCES

$950$ — COMBINE DIRECTLY MODULATED SEQUENCES AND DIGITALLY MODULATED SEQUENCES THAT SHARE THE SAME RADIO RESOURCES TO OBTAIN COMPOSITE MODULATED SEQUENCES

$955$ — MAP TO REs

$960$ — GENERATE AN SC-FDMA WAVEFORM

*FIG. 9*

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1753152 A1

**Non-patent literature cited in the description**

- *3GPP TS 36.211 V8.6.0: Technical Specification Group Radio Access Network; Evolved Universal Terrestrial Radio Access (E-UTRA); Physical Channels and Modulation (Release 8,* 13 March 2009, 1-82